# EUROPÄISCHE PATENTSCHRIFT

(11) **EP 2 164 661 B1**
(45) Veröffentlichungstag und Bekanntmachung des Hinweises auf die Patenterteilung: **16.11.2011**
(21) Anmeldenummer: 08758122.9
(22) Anmeldetag: 27.05.2008
(51) Int. Cl.: B23B 27/10, B23B 29/04, B23B 31/02

(54) **MODULARES WERKZEUGSYSTEM**
MODULAR TOOL SYSTEM
SYSTÈME D'OUTIL MODULAIRE

(30) Priorität: 17.07.2007 DE 102007033167
(43) Veröffentlichungstag der Anmeldung: 24.03.2010
(73) Patentinhaber: Kennametal Inc., Latrobe, PA 15650-0231 (US)
(72) Erfinder: STORCH, Helmut, 91541 Rothenburg o.d. Tauber (DE); LINDNER, Gregor, 65795 Hattersheim (DE)
(74) Vertreter: Vomberg, Friedhelm
(86) Internationale Anmeldenummer: PCT/DE2008/000882
(87) Internationale Veröffentlichungsnummer: WO 2009/010028

(56) Entgegenhaltungen:
- EP-A- 1 073 535
- WO-A-00/53362
- US-A- 5 901 623

## Beschreibung

Die Erfindung betrifft ein modulares Werkzeugsystem bestehend aus einem Werkzeuggrundhalter und einem Werkzeugträger, wobei der Werkzeuggrundhalter mindestens eine Aufnahmebohrung für den Schaft des Werkzeugträgers besitzt, der über eine Spannvorrichtung fixierbar ist und der einen Schneideinsatz zum Zerspanen, insbesondere zum Drehen von Werkstücken aufweist, wobei über eine Zufuhrleitung durch den Werkzeuggrundhalter und den Werkzeugträger Kühlmittelleitungen führen, durch welche ein unter Druck, insbesondere unter Hochdruck eingegebenes Kühlmittel zum Ort der jeweils aktiven Schneidkante führbar ist. Ein solches Werkzeugsystem ist beispielsweise aus der EP 1 073 535 bekannt.

Kühlmitteln bzw. Kühlschmiermitteln kommt bei Zerspanungsprozessen eine erhebliche Bedeutung zu. Beim Zerspanen, zu dem Drehen, Fräsen und Bohren zählen, kommt es an der aktiven Schneidkante, welche den Span von dem Werkstück abhebt, zu hohen Temperaturen, die den Verschleiß des Werkzeuges (Schneideinsatzes) beschleunigen. Der Grund für die Temperaturerhöhung an der Werkzeugschneide liegt darin, dass die spezifische Wärme sowie die Wärmeleitfähigkeit des Schneideinsatzwerkstoffes nicht ausreichen, um die entstehende Reibungswärme in hinreichendem Maße abzuführen. Bei der Zerspanung von Titanwerkstücken kommt noch hinzu, dass der Werkstoff Titan dazu neigt, sich mit dem Werkzeug zu verschweißen. Eine solche "Klebneigung" kann ebenfalls mit einem Kühlschmierstoff - im Folgenden kurz als Kühlmittel bezeichnet - verhindert bzw. minimiert werden. Um ein Kühlmittel in ausreichender Menge an den Zerspanungsort zu bringen, sind bereits verschiedene Maßnahmen vorgeschlagen worden.

So wird in der DE 37 40 814 A1 vorgeschlagen, dass der Werkzeughalter und der Schneideinsatz zur Kühlmittelbenetzung des Schneiden- und Spanflächenbereiches des Schneideinsatzes mit innerhalb der Anlageflächen dieser beiden Bauteile ineinander mündenden Kühlmittelkanälen versehen wird und dass mindestens ein Kühlmittelkanal des Schneideinsatzes in unmittelbarer Nähe der in Schneidstellung befindlichen Schneide in die Spanfläche mündet. Um dies zu bewirken, wird vorgeschlagen, dass die Spanfläche des Schneideinsatzes selbst mit Nuten versehen wird, über welche das Kühlmittel vom Werkzeughalter in Richtung der aktiven Schneidkante geführt wird. Nach einem alternativen Vorschlag in dieser Druckschrift sollen die Schneideinsätze selbst Kühlmittelkanäle in Form von Bohrungen aufweisen, die in die Spanfläche münden. Der Nachteil einer solchen Ausgestaltung liegt darin, dass durch solche Kühlnuten die Spanflächengeometrie des Schneideinsatzes beeinträchtigt und gegebenenfalls der Spanablauf, der zum Brechen relativ kurzer Späne führen soll, gestört wird. Nuten wie Bohrungen im Schneideinsatz besitzen zudem den Nachteil, dass der Schneideinsatzkörper selbst geschwächt wird. Schließlich können solche Ausgestaltungen auch nicht gewährleisten, dass das Kühlmittel in ausreichender Menge an den Zerspanungsort geführt wird.

Andere Lösungen, wie beispielsweise in der DE 930 790 C2 beschrieben, schlagen vor, dass der Strahl eines Mittels zum Kühlen und Schmieren aus einem Düsenmundstück unter Druck und hoher Geschwindigkeit in den Raum zwischen der Freifläche des Werkzeuges und dem Werkstück an die Schneide gespritzt wird. Abgesehen davon, dass hiermit im wesentlichen nur die Freifläche des Werkzeuges, nicht jedoch die Spanfläche sowie die abgehobenen Späne mit einem Kühlmittel beaufschlagt werden, besteht noch der Nachteil, dass diese Düse an einer separaten Haltevorrichtung angeordnet ist, die ohne Verbindung zum Werkzeug bzw. Werkzeughalter steht und somit schwer justierbar ist.

In der EP 1 073 535 B1 wird vorgeschlagen, die Verwendung des höchst möglichen Druckes eines Kühlmittels möglich zu machen und es in Form von einem oder mehreren feinen Strahlen hauptsächlich zu dem Schneideinsatz und den von dem Schneideinsatz freigeschnittenen Späne zu richten. Je höher der Druck gewählt werde, der in dem Fluidstrahl verwendet wird, umso größer sei die Möglichkeit, den Fluidstrahl nicht nur für das reine Kühlen auszunutzen, sondern ebenso, um die Späne, die von dem Werkstück freigeschnitten werden, mechanisch zu beeinflussen, insbesondere mit dem Ziel, die Späne in kleinstmögliche Teilchen zu brechen. Das Kühlmittel soll bei einem definiert hohen Druck auf die Schnittstelle gerichtet werden, der oberhalb von 100 bar (10⁷Pa) liegt. Hierzu besitzt der Werkzeughalter einen Sitz für einen Schneideinsatz sowie eine angeschraubte Platte, die mindestens eine Düse aufweist, die Teil eines Düseneinsatzes ist, der um seine eigene Mittelachse gedreht werden kann und derart in einer Position fixierbar sein soll, dass ein Fluidstrahl von dieser Düse ausgehend auf die Spanfläche des Schneideinsatzes gerichtet wird. Das Kühlmittel soll über ein oder mehrere Kanäle im Werkzeuggrundhalter in eine Bohrung eines Polygonschaftes des Werkzeughalters und von dort zu der Düse in der genannten Platte weitergeleitet werden. Über die Kühlmittelführung wird im Einzelnen nichts ausgeführt. Soweit an den Austrittsstellen von Bohrungen Dichtungsringe verwendet werden sollen, besteht nachteiliger Weise die Gefahr, dass diese bei hohen Fluiddrücken oberhalb von 10⁷Pa unzureichend dicht sind. Im Übrigen ist die Einstellung der Düse relativ aufwendig und deren Fixierung nicht hinreichend sicher, so dass sich insbesondere bei aufgegebenen hohen Drücken die Strahlrichtung ändern kann.

In der US 5,340,242 wird ein Werkzeughalter für einen Schneideinsatz vorgeschlagen, bei dem abseits von dem Schneideinsatz ein Körper angeschraubt wird, der eine Durchgangsbohrung für einen Kühlmittelstrom hat. Diese Durchgangsbohrung führt zum einen in einen Werkzeughalterschaft mit einem Kühlmitteleinlass sowie zu einem kleinen Kühlmittelauslass, durch den strahlkegelförmig Kühlmittel in Richtung der aktiven Schneidkante des Schneideinsatzes gesprüht werden kann. Um die Strahlkegelrichtung einstellen zu können, ist eine Justierschraube mit einem Exzenterkopf vorgesehen. Auch hier besteht die Gefahr, dass sich die gewählte Einstellung verändert, so dass offensichtlich das Kühlmittel nur bis zu einem Druck von maximal 10 Bar aufgegeben wird.

Schließlich wird in der WO 00/53362 eine Werkzeugkupplung mit einem Halter, einem Adapter für wenigstens einen Schneideinsatz für die spanabhebende Bearbeitung und einem separatem Element beschrieben, um den Halter und den Adapter abnehmbar miteinander zu verbinden. Hierzu sind an den Kontaktflächen korrespondierend ausgebildete Nuten ausgeformt, wobei eine Verbindungsschraube mit dem Halter und dem Adapter in Eingriff steht.

Es ist Aufgabe der vorliegenden Erfindung ein modulares Werkzeugsystem der eingangs genannten Art weiter zu entwickeln, das geeignet ist, mit hohen Kühlschmierstoffmitteldrucken zu arbeiten, wobei der Kühlmittelstrom ohne die Gefahr von Leckagen zielgerichtet zum Zerspanungsort geleitet werden kann.

Diese Aufgabe wird durch das Werkzeugsystem nach Anspruch 1 gelöst, bei dem erfindungsgemäß die jeweiligen Anschlussstellen zwischen zwei mit ihren Planflächen aneinander liegenden Bauteilen des Werkzeugsystems durch einen Rohrkörper überbrückt werden, der beidseitig in den Bauteilen fixiert wird, vorzugsweise über eine Gewindeverbindung, wobei der Rohrkörper jeweils in vorhandene Bohrungen der Bauteile nach außen abgedichtet mündet.

Anders als bei dem nach dem Stand der Technik bekannten Lösungen werden an den Ort, an denen ansonsten Dichtungen ein Ausströmen der Kühlflüssigkeit verhindern sollen, nunmehr druckdichte Rohrkörper eingesetzt, die über die Gewindeverbindung in längsaxialer Richtung der Bohrung sicher fixiert werden. Auf diese Weise ist es möglich die gesamte Kühlmittelzufuhr von der Werkzeugmaschinenseite in den Werkzeuggrundhalter und von dort aus in den Werkzeughalter bis zur Einströmöffnung zu leiten, wobei der Grundhalter sowie auch der Werkzeughalter jeweils mehrstückig aufgebaut sein können, ohne dass an die Verbindung der einzelnen Bauteile hinsichtlich der Abdichtung besonders hohe Anforderungen gestellt werden. Insbesondere kann im Bereich des Werkzeuggrundhalters eine Kassette mit einer Spannvorrichtung verwendet werden, die selbst eine Bohrung zur Durchführung des Kühlmittels aufweist.

Der verwendete Rohrkörper besitzt vorzugsweise jeweils endseitig gegenläufige Außengewinde, die sich leicht in entsprechende Gewindebohrungen der einzelnen Bauteile einschrauben lassen. Wie bereits erwähnt, ist nach einer Ausgestaltung der vorliegenden Erfindung die Spannvorrichtung in einem separaten kanisterförmigen Bauteil angeordnet, das vorzugsweise einzelne von außen über eine Spannschraube betätigbare Spannelemente, insbesondere Kugeln, und eine Kühlmittelbohrung aufweist, in der beidseitig am Ende Rohrkörper eingeschraubt sind.

Weiterhin vorzugsweise besitzt der Werkzeuggrundhalter mindestens zwei Aufnahmebohrungen, die jeweils einen separaten Anschluss für eine Hochdruck-Kühlmittelzufuhr besitzen, der bzw. die vorzugsweise mit einer Auslassöffnung an einer Werkzeugmaschine verbindbar ist. Diese Ausgestaltung hat den Vorteil, dass auf Hochdruckanschlussleitungen in der Nähe des Schneidwerkzeuges völlig verzichtet werden kann. Solche Anschlussleitungen, die nach dem Stand der Technik benötigt wurden, waren durch umher fliegende Späne oder auch etwaige lange Wirrspäne gefährdet. Durch die vollständig interne Kühlmittelführung von der Werkzeugmaschinenseite über den Grundhalter in den Werkzeughalter sind Leckagen weitgehend ausgeschlossen.

Die separaten Anschlüsse sind für eine Hochdruck-Kühlmittelaufgabe ausgelegt und können separat gesteuert bzw. geregelt werden.

Nach einer weiteren Ausgestaltung ist zusätzlich mindestens ein weiterer, durch einen Stopfen verschließbarer Niederdruck-Kühlmittelanschluss am Werkzeuggrundhalter vorgesehen, dessen Bohrung oder Bohrungen in die bereits beschriebenen (Hochdruck-)Kühlmittelleitungen münden, so dass wahlweise Kühlmittel unter Nieder- oder Hochdruck zugeführt werden können. Im Falle eines Hochdruck-Kühlmittelzuflusses werden die Niederdruck-Kühlmittelanschlüsse durch einen Stopfen verschlossen. Umgekehrt ist ein Verschließen der Hochdruck-Zuleitung durch Stopfen nicht erforderlich, da dort einfache Rückschlagventile, die auf den Hochdruckbetrieb ausgelegt sind, ausreichend. Unter einer Niederdruck-Kühlmittelzufuhr versteht man eine solche, bei der die Drücke bis zu 80 x 10⁵Pa betragen.

Der Kühlmittelauslass kann im Prinzip in einer Form gewählt werden, wie sie prinzipiell aus der US 5,340,242 oder der EP 1 073,535 bekannt ist. Insbesondere bei der Zerspanung von Titan-Werkstoffen treten jedoch in Folge der hohen Temperaturen an der Schneidkante Schweißeffekte zwischen dem Werkzeug (Schneideinsatz) und dem abgelösten Span auf. Der heiße Span befindet sich über eine relativ lange Strecke mit dem Werkzeug in Kontakt, wo es unter Umständen zunächst zu Ablagerungen an der Schneidkante und später zu einem Abbrechen größerer Schneidkantenstücke kommen kann. Insofern ist beim Zerspanen von Titan eine besonders gute Kühlung bzw. Wärmeabfuhr erforderlich. Zu diesem Zweck besitzt der Werkzeughalter nach einer weiteren Ausbildung der Erfindung einen lösbar befestigten Klemmdeckel mit einer Kühlmitteleinlassöffnung sowie mehrere hiermit unmittelbar oder mittelbar über kreuzweise angeordnete Querbohrungen verbundene kleine Auslasskanäle, die so gerichtet sind, dass die vordere Schneidkante des Schneideinsatzes, die bei einer Werkstückbearbeitung zerspanend in das Werkstück eingreift, über die gesamte Eingriffslänge der Zerspanung mit einem Kühlmittel bestrahlt wird. Anstelle eines einzelnen Strahles werden somit mehrere feine Strahle auf den Zerspanungsort gerichtet, die nadelstichartig zur Schneidkante vordringen, so dass weder umher fliegende Späne, noch am Zerspanungsort verdampfende Kühlflüssigkeit zu einer verschlechterten Kühlung führen können. Es sind mindestens zwei solcher Auslasskanäle, vorzugsweise drei oder vier Auslasskanäle vorgesehen.

Nach einer weiteren Ausgestaltung der Erfindung ist der Klemmdeckel als Klemmpratze für den Schneideinsatz ausgebildet, der über einen in eine Schneideinsatzspannmulde greifenden Klemmfinger auf dem Werkzeughalter fixiert wird. Die Ausbildung der Klemmmulde sowie des Klemmfingers ist grundsätzlich nach dem Stand der Technik ebenso wie die gegenseitige Anordnung bekannt, wobei beim Festziehen der Klemmpratze der Klemmfinger mit seiner vorderen Spitze über die Kontaktstelle in der Spannmulde den Schneideinsatz in den Werkzeugsitz des Werkzeughalters hineinpresst. Der Klemmdeckel bzw. die Klemmpratze selbst wird mit einer oder mehreren Klemmschrauben befestigt.

Die genannten Auslasskanäle haben Austrittsöffnungen mit einem Durchmesser von 0,5 mm bis 2 mm, vorzugsweise 1 mm.

Weitere Ausführungsbeispiele sowie Vorteile der Erfindung werden anhand der Zeichnungen erläutert. Es zeigen:
- Fig. 1: eine perspektivische Ansicht eines Werkzeuggrundhalters,
- Fig. 2a, b: Teilschnittansichten durch den Werkzeuggrundhalter mit Schnittebenen im Bereich einer Kühlmittelleitung,
- Fig. 3: eine teilgeschnittene Ansicht eines Werkzeughalters,
- Fig. 4a bis c: jeweils Ansichten eines Werkzeughalters mit befestigtem Klemmdeckel und
- Fig. 5: eine Ansicht eines Werkzeughalters mit befestigter Klemmpratze.

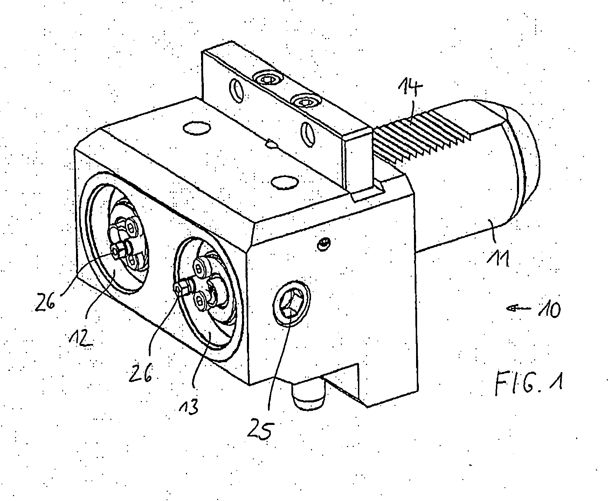

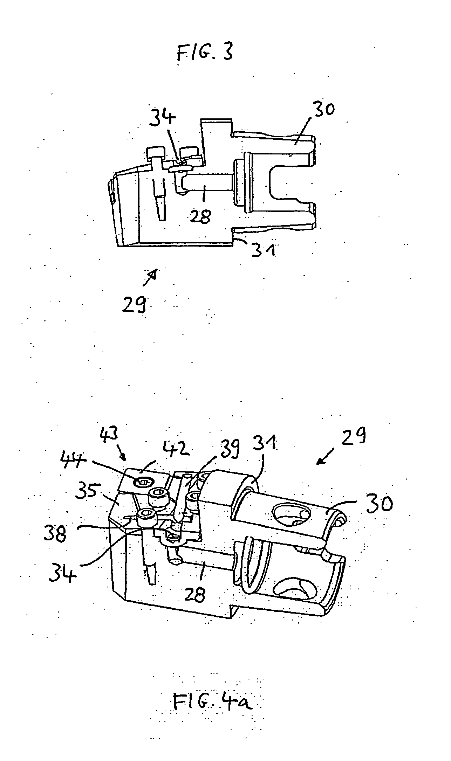

Der in Fig. 1 dargestellte Werkzeuggrundhalter 10 besitzt einen Halterungsschaft 11 sowie zwei Aufnahmebohrungen 12, 13, die zum Einschub für Werkzeugträgerschäfte ausgestaltet sind. In Betracht kommen hier insbesondere Hohlschaftskegel, wie sie den Fig. 3 bis 5 entnehmbar sind. An der Oberseite besitzt der Schaft 11 eine Rasterprofilierung 14.

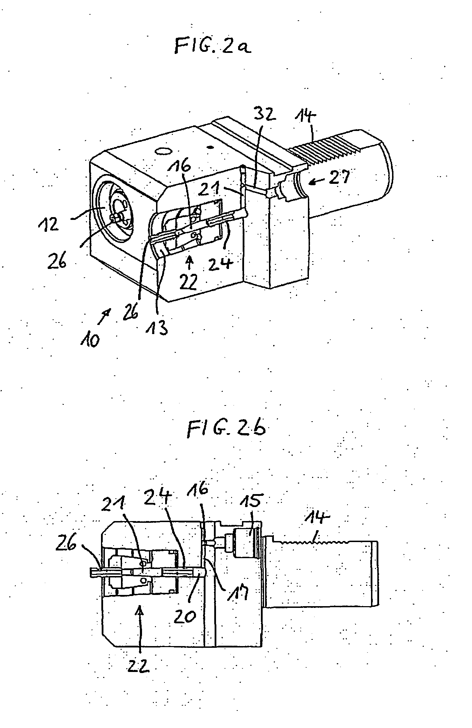

Wie teilweise aus Fig. 2b ersichtlich ist, sind an der Rückseite des Werkzeuggrundhalters 10 zwei nebeneinander liegende Öffnungen 15 vorgesehen, an denen von der Maschinenseite her Hochdruckleitungen zur Kühlmittelzufuhr angeschlossen werden können. Die Anschlüsse 15 sowie die nachfolgend beschriebene Kühlmittelzuführung ist für Drucke > 100 Bar (10⁷Pa) ausgelegt. Im Fortlauf verkleinert sich der Durchmesser gegenüber der Eintrittsöffnung 15 zu einem geringeren Maß, wonach diese Bohrung schließlich in eine Querbohrung 16 bzw. 17 mündet, die endseitig mit einem Stopfen 18 verschlossen ist. Die Querbohrung ist erforderlich, um den Kühlmittelstrom seitwärts aus dem Bereich der Spannvorrichtung herauszuführen. Diese Querbohrung 17 mündet in einer Längsbohrung 20, welche durch einen Kanister 22 führt, der auch eine Spannvorrichtung trägt, bei der beispielsweise als Spannelemente Kugeln verwendet werden, die über Spannschrauben 25 unter Vermittlung eines kegelförmigen Abschnittes betätigbar sind und dazu dienen, den Schaft 30 so zu spannen, dass die jeweiligen Plananlageflächen rings um die Aufnahme 12, 13 des Werkzeuggrundhalters und die ringförmige Plananlagefläche 31 des Werkzeughalters aneinander liegen bzw. beim Spannen aneinander geführt werden.

Die Kühlmittelbohrung 20 ist endseitig mit einem Rohrkörper 24 verbunden, der über ein Außengewinde sowohl mit dem Werkzeuggrundhalter 10 als auch mit dem Kanister 22 verbunden ist. Der Rohrkörper 24 mündet in eine Bohrung 21, die wiederum in einen weiteren Rohrkörper 26 mündet, der über ein Außengewinde verfügt, das in betreffende Innengewinde der vorhandenen Bohrungen im Werkzeuggrundhalter 10 und Werkzeughalter 29 eingeschraubt wird. Auf diese Weise wird bei der Kühlmittelleitung 20 am Übergang zum Kanister 22 bzw. vom Kanister 22 zum Werkzeughalter 29 der vorhandene hohe Kühlmitteldruck abgefangen, so dass beispielsweise bei dem Kanister auf handelsübliche Bauteile zurückgegriffen werden kann.

Der Werkzeuggrundhalter 10 besitzt jedoch zudem einen weiteren Anschluss 27 für eine Niederdruck-Kühlmittelaufgabe, der in die Kühlmittelführung 21 bzw. ein entsprechendes Rohrstück 24 über eine Querbohrung 32 mündet. Der Anschluss 27 ist über einen Stopfen verschließbar.

Die Kühlmitteleinlassöffnungen 15 können jeweils separat mit einem entsprechenden Kühlmittel-Hochdruck beaufschlagt werden, so dass der Kühlmitteldruck dem Bedarfszweck angepasst werden kann.

Der Verlauf der Kühlmittelführung 20, 21 einschließlich der Querführung ist im Wesentlichen dadurch bestimmt, dass die nicht dargestellten Spannschrauben "umgangen" werden müssen. Auf diese Art und Weise kann der Werkzeuggrundhalter kompakt gebaut werden.

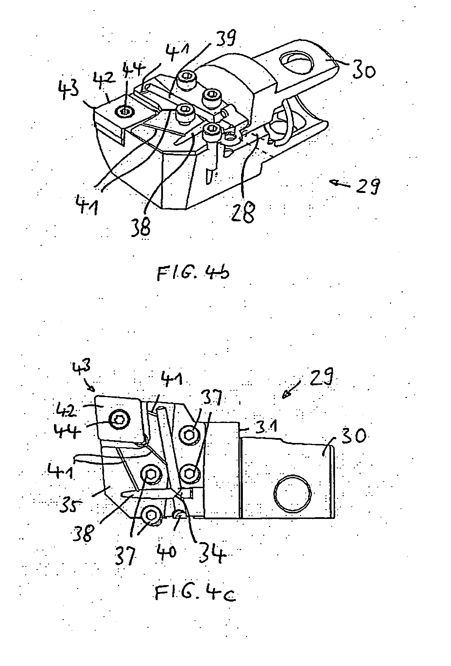

Im Werkzeughalter 29 wird über die Kühlmittelleitung 28 sowie eine Querbohrung das Kühlmittel zu einem Auslass 34 geleitet, der unterhalb des Klemmkörpers 35 (siehe Fig. 4) oder einer Klemmpratze 36 mündet. Der Klemmkörper 35 ist auf dem Werkzeugträger mit vier Spannschrauben 37 befestigt. Der Klemmkörper besitzt zwei sich kreuzende Bohrungen 38, 39, die sich an einem gemeinsamen Kreuzungspunkt schneiden, wobei die Bohrungen in Verbindung mit der Austrittsöffnung 34 stehen, so dass das dort austretende Kühlmittel in die Bohrungen 38 und 39 gelangen kann. Aus fertigungstechnischen Gründen sind die "blinden Enden" der Bohrungen durch Stopfen 40 jeweils verschlossen. Von den Bohrungen 38 und 39 gehen dünne Kanäle 41 mit einem Durchmesser von 1 mm ab, deren Längsachsen so gerichtet sind, dass die Verlängerung im Bereich der Schneidecke eines Schneideinsatzes 42 so konvergieren, dass die Schneidkante im Bereich der Schneidecke 43 an den aktiven Zerspanungsorten gleichmäßig mit einer Kühlmittelflüssigkeit beaufschlagt wird. Der Schneideinsatz 42 ist in bekannter Weise mittels einer Spannschraube 44 befestigt. Die Kühlmittelzufuhr gelangt somit in geschützter Weise von der Werkzeugmaschine über den Werkzeuggrundhalter und den Werkzeughalter zur Schneidecke 43 eines Schneideinsatzes 42, wo der Kühlmittelstrom in drei durchmesserkleine Strahlen aufgeteilt wird. Diese Kühlmittelstrahlen können sowohl zur Temperaturminimierung an der Schneidkante als auch zur Beeinflussung des Spanablaufes bzw. dem Spanbruch dienen.

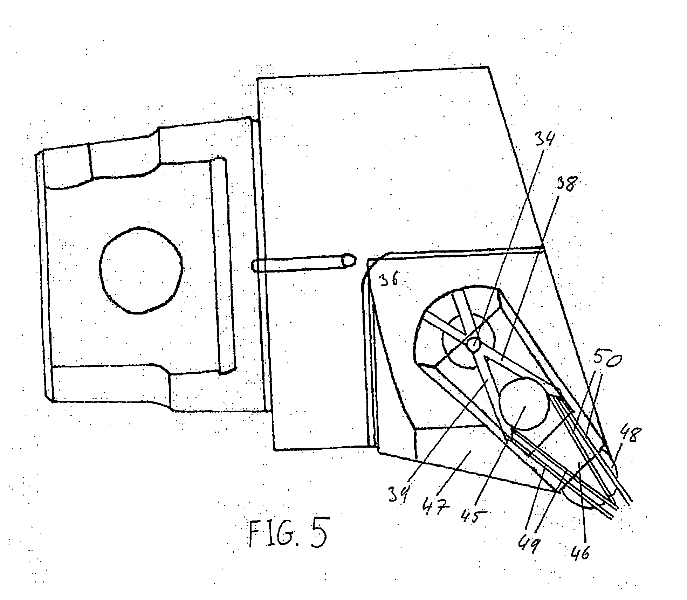

Die Ausführungsform nach Fig. 5 unterscheidet sich im Wesentlichen dadurch, dass der Klemmkörper als Klemmpratze 36 ausgestaltet ist. Die Klemmpratze wird mittels einer Klemmschraube 45 auf dem Werkzeughalter befestigt und besitzt einen Klemmfinger 46, der in eine Spannmulde eines Schneideinsatzes 47 eingreift und diesen in den Sitz für den Schneideinsatz presst. Die sich kreuzenden Kanäle 38 und 39 münden zur Seite, die dem Schneideinsatz 48, der im vorliegenden Fall eine kreisrunde Schneidkante besitzt, zugewandt ist, in zwei Paare von Kanälen 49, 50, die unter einem geringen Winkel zur Auslassöffnung leicht divergierend jeweils auseinander laufen. Insgesamt werden über die vorderen Austrittsöffnungen 49, 50 an der Klemmpratze 36 vier Kühlmittelstrahlen erzeugt, die einen bogenförmigen Bereich von ca. 90 bis 130° abdecken.

Die Ausrichtung der Kanäle 41 bzw. 49 und 50 wird jeweils so gewählt, dass die austretenden Kühlmittelstrahlen in Abhängigkeit von der Geometrie des einzusetzenden Schneideinsatzes zielgerichtet an den Ort der Spanbildung gelangen. Die Klemmpratze bzw. der Klemmkörper sind fest mit dem Werkzeughalter verbunden, so dass eine Fehlausrichtung der Kühlmittelstrahlen ausgeschlossen ist.

Der Werkzeughalter 29 kann insbesondere so ausgebildet sein, dass wahlweise entweder der Klemmkörper nach Fig. 4a bis 4c oder die Klemmpratze 36 nach Fig. 5 montiert werden kann.

## Patentansprüche

1. Modulares Werkzeugsystem, bestehend aus einem Werkzeuggrundhalter (10) und einem Werkzeugträger (29), wobei der Werkzeuggrundhalter (10) mindestens eine Aufnahmebohrung (12, 13) für den Schaft des Werkzeugträgers (29) besitzt, der über eine Spannvorrichtung fixierbar ist und der einen Schneideinsatz (42, 48) zum Zerspanen, insbesondere zum Drehen von Werkstücken aufweist, wobei über eine Zufuhrleitung durch den Werkzeuggrundhalter (10) und den Werkzeugträger (29) Kühlmittelleitungen führen, durch welche ein unter Druck, insbesondere unter Hochdruck eingegebenes Kühlmittel zum Ort der jeweils aktiven Schneidkante führbar ist,
**dadurch gekennzeichnet, dass**
die jeweiligen Anschlussstellen zwischen zwei mit ihren Planflächen aneinander liegenden Bauteilen des Werkzeugsystems durch einen Rohrkörper (26) überbrückt werden, der beidseitig in den Bauteilen (10; 22; 29) fixiert wird, vorzugsweise über eine Gewindeverbindung, wobei der Rohrkörper (24, 26) jeweils in vorhandene Bohrungen der Bauteile nach außen abgedichtet mündet.

2. Modulares Werkzeugsystem nach Anspruch 1, **dadurch gekennzeichnet, dass** der Rohrkörper (26) jeweils endseitig gegenläufige Außengewinde aufweist.

3. Modulares Werkzeugsystem nach Anspruch 1 oder 2, **dadurch gekennzeichnet, dass** die Spannvorrichtung in einem separaten kanisterförmigen Bauteil (22) angeordnet ist, das vorzugsweise einzelne von außen über eine Spannschraube betätigbare Spannelemente, insbesondere Kugeln, und eine Kühlmittelbohrung aufweist, in der beidseitig am Ende Rohrkörper (24, 26) eingeschraubt sind.

4. Modulares Werkzeugsystem nach einem der Ansprüche 1 bis 3, **dadurch gekennzeichnet, dass** der Werkzeuggrundhalter (10) mindestens zwei Aufnahmebohrungen (12, 13) aufweist, die jeweils einen separaten Anschluss (15) für eine Hochdruckkühlmittelzufuhr besitzen, der vorzugsweise mit einer Auslassöffnung an einer Werkzeugmaschine verbindbar ist.

5. Modulares Werkzeugsystem nach einem der Ansprüche 1 bis 4, **dadurch gekennzeichnet, dass** zusätzlich mindestens ein weiterer, durch einen Stopfen verschließbarer Niederdruck-Kühlmittelanschluss (27) am Werkzeuggrundhalter (10) vorgesehen ist, dessen Bohrung oder Bohrungen (32) in die Kühlmittelleitungen (20, 21) münden, so dass wahlweise Kühlmittel unter Nieder- oder Hochdruck zuführbar ist.

6. Modulares Werkzeugsystem nach einem der Ansprüche 1 bis 5, **dadurch gekennzeichnet, dass** vorhandene separate Anschlüsse für die Kühlmittelzufuhr separat steuerbar oder regelbar sind.

7. Modulares Werkzeugsystem nach einem der Ansprüche 1 bis 6, **dadurch gekennzeichnet, dass** der Werkzeughalter (29) einen lösbar befestigten Klemmdeckel (35, 36) mit einer Kühlmitteleinlassöffnung (34) sowie mehrere hiermit unmittelbar oder über kreuzweise angeordnete Querbohrungen (38, 39) mittelbar verbundene im Durchmesser kleinere Auslasskanäle (41; 49, 50) aufweist, die so gerichtet sind, dass die vordere Schneidkante des Schneideinsatzes (42, 48) die bei einer Werkstückbearbeitung zerspanend in das Werkstück eingreift, über die gesamte Eingriffslänge der Zerspanung mit einem Kühlmittel bestrahlt wird.

8. Modulares Werkzeugsystem nach Anspruch 7, **dadurch gekennzeichnet, dass** mindestens zwei, vorzugsweise drei oder vier Auslasskanäle vorgesehen sind.

9. Modulares Werkzeugsystem nach Anspruch 7 oder 8, **dadurch gekennzeichnet, dass** der Klemmdeckel als Klemmpratze (36) für den Schneideinsatz (48) ausgebildet ist, der über einen in eine Schneideinsatzspannmulde greifenden Klemmfinger auf dem Werkzeughalter fixierbar ist.

10. Modulares Werkzeugsystem nach einem der Ansprüche 7 bis 9, **dadurch gekennzeichnet, dass** der Durchmesser der Auslasskanäle (41; 49, 50) 0,5 mm bis 2 mm, vorzugsweise 1 mm beträgt.

## Claims

1. Modular tool system, consisting of a parent tool holder (10) and a tool carrier (29), wherein the parent tool holder (10) has at least one locating bore (12, 13) for the shank of the tool carrier (29), which can be fixed via a clamping device and which has a cutting insert (42, 48) for cutting, in particular for turning, workpieces, wherein coolant lines lead via a feed line through the parent tool holder (10) and the tool carrier (29), through which coolant lines a coolant introduced under pressure, in particular under high pressure, can be directed to the location of the respectively active cutting edge, **characterized in that** the respective connection locations between two components of the tool system which bear against one another with their flat faces are bridged by a tubular body (26) which is fixed on both sides in the components (10; 22; 29), preferably via a threaded connection, wherein the tubular body (24, 26) in each case opens into existing bores of the components in a sealed off manner to the outside.

2. Modular tool system according to Claim 1, **characterized in that** the tubular body (26) in each case has opposed external threads at the ends.

3. Modular tool system according to Claim 1 or 2, **characterized in that** the clamping device is arranged in a separate canister-like component (22) which preferably has individual clamping elements, in particular balls, actuable from the outside via a clamping screw, and a coolant bore in which tubular bodies (24, 26) are screwed on both sides at the end.

4. Modular tool system according to one of Claims 1 to 3, **characterized in that** the parent tool holder (10) has at least two locating bores (12, 13) which each have a separate connection (15) for a high-pressure coolant feed, which can preferably be connected to an outlet opening at a machine tool.

5. Modular tool system according to one of Claims 1 to 4, **characterized in that** at least one further low-pressure coolant connection (27) which can be closed by a plug is additionally provided on the parent tool holder (10), the bore or bores (32) of which coolant connection or connections opens and/or open into the coolant feed lines (20, 21), such that coolant can optionally be fed under low pressure or high pressure.

6. Modular tool system according to one of Claims 1 to 5, **characterized in that** existing separate connections for the coolant feed can be controlled separately.

7. Modular tool system according to one of Claims 1 to 6, **characterized in that** the tool holder (29) has a detachably fastened clamping lid (35, 36) with a coolant inlet opening (34) and a plurality of outlet passages (41; 49, 50) which are directly connected thereto or are indirectly connected thereto via transverse bores (38, 39) arranged crosswise and which are of smaller diameter and are directed in such a way that the front cutting edge of the cutting insert (42, 48), said cutting edge engaging in the workpiece with a cutting action when machining the workpiece, is exposed to a stream of coolant over the entire engagement length of the cutting.

8. Modular tool system according to Claim 7, **characterized in that** at least two, preferably three or four outlet passages are provided.

9. Modular tool system according to Claim 7 or 8, **characterized in that** the clamping lid is designed as a clamping shoe (36) for the cutting insert (48), which can be fixed on the tool holder via a clamping finger which engages in a cutting-insert clamping depression.

10. Modular tool system according to one of Claims 7 to 9, **characterized in that** the diameter of the outlet passages (41; 49, 50) is 0.5 mm to 2 mm, preferably 1 mm.

## Revendications

1. Système d'outil modulaire, constitué d'un porte-outil de base (10) et d'un support d'outil (29), le porte-outil de base (10) possédant au moins un alésage de réception (12, 13) pour la tige du support d'outil (29), qui peut être fixée par le biais d'un dispositif de serrage et qui présente un insert de coupe (42, 48) pour l'usinage par enlèvement de copeaux, notamment pour le tournage de pièces, des conduites de réfrigérant conduisant par le biais d'une conduite d'alimentation à travers le porte-outil de base (10) et le support d'outil (29), lesquelles permettent de guider un réfrigérant introduit sous pression, notamment sous haute pression, jusqu'à l'endroit de l'arête de coupe active respective,
**caractérisé en ce que**
les points de raccordement respectifs entre deux composants du système d'outil, adjacents par leurs faces planes, sont surmontés par un corps tubulaire (26) qui est fixé de chaque côté dans les composants (10 ; 22 ; 29), de préférence par le biais d'une connexion filetée, le corps tubulaire (24, 26) débouchant à chaque fois de manière étanchée vers l'extérieur dans des alésages existants des composants.

2. Système d'outil modulaire selon la revendication 1, **caractérisé en ce que** le corps tubulaire (26) présente à chaque fois des filetages extérieurs de sens opposé du côté de l'extrémité.

3. Système d'outil modulaire selon la revendication 1 ou 2, **caractérisé en ce que** le dispositif de serrage est disposé dans un composant séparé en forme de cartouche (22), qui présente de préférence des éléments de serrage individuels pouvant être actionnés depuis l'extérieur par le biais d'une vis de serrage, notamment des billes, et un alésage de réfrigérant dans lequel sont vissés des corps tubulaires (24, 26) de chaque côté à l'extrémité.

4. Système d'outil modulaire selon l'une quelconque des revendications 1 à 3, **caractérisé en ce que** le porte-outil de base (10) présente au moins deux alésages de réception (12, 13), qui possèdent chacun un raccord séparé (15) pour une alimentation en réfrigérant haute pression, lequel raccord peut de préférence être connecté par une ouverture de sortie à une machine-outil.

5. Système d'outil modulaire selon l'une quelconque des revendications 1 à 4, **caractérisé en ce que**, de plus, au moins un raccord de réfrigérant basse pression supplémentaire (27), pouvant être fermé par un bouchon, est prévu sur le porte-outil de base (10), dont l'alésage ou les alésages (32) débouchent dans les conduites de réfrigérant (20, 21), de sorte que du réfrigérant à basse ou haute pression puisse être acheminé au choix.

6. Système d'outil modulaire selon l'une quelconque des revendications 1 à 5, **caractérisé en ce que** des raccords séparés existants pour l'alimentation en réfrigérant peuvent être commandés ou régulés séparément.

7. Système d'outil modulaire selon l'une quelconque des revendications 1 à 6, **caractérisé en ce que** le support d'outil (29) présente un couvercle de serrage (35, 36) fixé de manière amovible avec une ouverture d'entrée de réfrigérant (34) ainsi que plusieurs canaux de sortie de plus petit diamètre (41 ; 49, 50) connectés à celle-ci directement ou indirectement par le biais d'alésages transversaux (38, 39) disposés en croix, les canaux de sortie étant orientés de telle sorte que l'arête de coupe avant de l'insert de coupe (42, 48), qui vient en prise dans la pièce par enlèvement de copeaux lors de l'usinage d'une pièce, soit soumise à une projection de réfrigérant sur toute la longueur d'action de l'enlèvement de copeaux.

8. Système d'outil modulaire selon la revendication 7, **caractérisé en ce qu'**au moins deux, de préférence trois ou quatre canaux de sortie sont prévus.

9. Système d'outil modulaire selon la revendication 7 ou 8, **caractérisé en ce que** le couvercle de serrage est réalisé sous forme de griffe de serrage (36) pour l'insert de coupe (48), qui peut être fixé sur le support d'outil par le biais d'un doigt de serrage venant en prise dans un creux de serrage de l'insert de coupe.

10. Système d'outil modulaire selon l'une quelconque des revendications 7 à 9, **caractérisé en ce que** le diamètre des canaux de sortie (41 ; 49, 50) est compris entre 0,5 mm et 2 mm, de préférence vaut 1 mm.
